(19) Europäisches Patentamt
European Patent Office
Office européen des brevets

(11) **EP 1 857 704 A2**

(12) **EUROPÄISCHE PATENTANMELDUNG**

(43) Veröffentlichungstag:
**21.11.2007  Patentblatt 2007/47**

(51) Int Cl.:
***F16D 48/06*** *(2006.01)*

(21) Anmeldenummer: **07009139.2**

(22) Anmeldetag: **07.05.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK YU**

(30) Priorität: **20.05.2006  DE 102006023807**

(71) Anmelder: **LuK Lamellen und Kupplungsbau Beteiligungs KG**
**77815 Bühl (DE)**

(72) Erfinder:
- **Baehr, Markus, Dr.**
  **77855 Achern (DE)**
- **Gerhart, Jürgen**
  **77767 Appenweier (DE)**
- **Schuhen, Michael**
  **77830 Bühlertal (DE)**

(54) **Verfahren und Vorrichtung zum Überprüfen der Selbstöffnungsfunktion einer von einem Aktor betätigten Kupplung**

(57)   Bei einem Verfahren zum Überprüfen der Selbstöffnungsfunktion einer von einem Aktor betätigten Kupplung wird die Kupplung von dem Aktor mit vorgegebener konstanter Geschwindigkeit aus ihrer Schließstellung in ihre Offenstellung oder aus ihrer Offenstellung in ihre Schließstellung bewegt, während der Bewegung der Kupplung eine Kraft/Weg-Kurve aufgenommen, die Stelle des Weges ermittelt, bei der die Kraft minimal ist, die Kupplung von dem Aktor an die ermittelte Wegstelle bewegt, der Aktor deaktiviert und überprüft, ob die Kupplung nach Deaktivieren des Aktors in vorbestimmter Weise in ihre Offenstellung zurückkehrt.

EP 1 857 704 A2

**Beschreibung**

Die Erfindung betrifft ein Verfahren und eine Vorrichtung zum Überprüfen der Selbstöffnungsfunktion einer von einem Aktor betätigten Kupplung.

Insbesondere bei Doppelkupplungs- bzw. Parallelschaltgetrieben sind die Kupplungen vorteilhafter Weise derart konstruiert, dass sie bei Ausfall ihrer Aktoren selbsttätig öffnen. Auch für die Positionsreferenzierung der Kupplungsaktorik wird bevorzugt von einem selbstöffnenden Kupplungssystem ausgegangen, bei dem beispielsweise bei Deaktivieren des Aktors eine durch einen Anschlag gegebene Offenstellung selbsttätig angefahren wird, die zur Referenzierung eines Inkrementsensors, der als Wegsensor dient, verwendet wird.

Der Erfindung liegt die Aufgabe zugrunde, eine Möglichkeit anzugeben, mit der eine einwandfreie Selbstöffnungsfunktion einer Kupplung sicher erkannt bzw. überwacht werden kann.

Lösungen dieser Aufgabe werden mit den Verfahren und den Vorrichtungen gemäß den beigefügten Patentansprüchen erzielt.

Gemäß einer ersten Durchführungsform eines Verfahrens zum Überprüfen der Selbstöffnungsfunktion einer von einem Aktor betätigten Kupplung wird die Kupplung von dem Aktor mit vorgegebener konstanter Geschwindigkeit aus ihrer Schließstellung in ihre Offenstellung oder aus ihrer Offenstellung in ihre Schließstellung bewegt und die von dem Aktor aufgebrachte Kraft während der Bewegung erfasst und ein Unterschreiten und/oder ein Überschreiten eines vorbestimmten Wertes der Kraft als fehlerhafte Selbstöffnung gewertet.

Bei einer alternativen Durchführungsform eines Verfahrens zum Überprüfen der Selbstöffnungsfunktion einer von einem Aktor betätigten Kupplung wird die Kupplung von dem Aktor mit vorgegebener konstanter Geschwindigkeit aus ihrer Schließstellung in ihre Offenstellung oder aus ihrer Offenstellung in ihre Schließstellung bewegt, wird während der Bewegung der Kupplung die Stelle des Weges ermittelt, bei der die Kraft minimal ist, wird die Kupplung von dem Aktor an die ermittelte Wegstelle bewegt, wird der Aktor deaktiviert und wird überprüft, ob die Kupplung nach Deaktivieren des Aktors in vorbestimmter Weise in ihre Offenstellung zurückkehrt.

Vorteilhafter Weise ist der Aktor ein Elektromotor und wird die Kraft durch Erfassen der Spannung des auf konstante Drehzahl geregelten Elektromotors ermittelt.

Die Überprüfung, ob die Kupplung nach Deaktivieren des Aktors in vorbestimmter Weise in ihre Offenstellung zurückkehrt, geschieht beispielsweise dadurch, dass überprüft wird, ob die Kupplung innerhalb einer vorbestimmten Zeitdauer in ihre Offenstellung zurückkehrt.

Alternativ oder zusätzlich kann überprüft werden, ob sich die Kupplung wenigstens mit einer vorbestimmten Mindestgeschwindigkeit in Richtung auf ihre Offenstellung bewegt.

Gemäß einem weiteren Verfahren zum Überprüfen der Selbstöffnungsfunktion einer von einem Aktor betätigten Kupplung wird die Kupplung von einem Aktor mit vorgegebener konstanter Kraft aus ihrer Schließstellung in ihre Offenstellung oder aus ihrer Offenstellung in ihre Schließstellung bewegt, die Geschwindigkeit während der Bewegung erfasst und eine Überschreitung eines vorbestimmten Wertes der Öffnungsgeschwindigkeit und/oder ein Unterschreiten eines vorbestimmten Wertes der Öffnungsgeschwindigkeit als fehlerhafte Öffnungsfunktion gewertet.

Eine Vorrichtung zum Überprüfen der Selbstöffnungsfunktion einer von einem Aktor betätigten Kupplung enthält vorteilhafter Weise eine gegen die Kraft einer Öffnungsfeder schließenden Kupplung, einen Aktor zum Betätigen der Kupplung, wobei der Aktor bei einwandfreier Funktion Systemfunktion im aktivierten Zustand der Kupplung gegen die Kraft der Öffnungsfeder schließt und die Kupplung im deaktivierten Zustand des Aktors von der Öffnungsfeder aus der Schließstellung in die Offenstellung gedrängt wird, eine Kraftmesseinrichtung zum Erfassen der vom Aktor auf die Kupplung während des Öffnens oder des Schließens der Kupplung aufgebrachten Kraft und eine Auswerteinrichtung zum Ermitteln des minimalen und/oder maximalen Wertes der Kraft während des Öffnens oder des Schließens der Kupplung.

Weiter kann eine Geschwindigkeitssteuereinrichtung zur Steuerung des Aktors derart vorgesehen sein, dass die Kupplung mit konstanter Geschwindigkeit geöffnet wird.

Eine weitere Ausführungsform der erfindungsgemäßen Vorrichtung enthält einen Wegsensor zum Erfassen der Stellung der Kupplung während des Öffnens, welcher Wegsensor mit der Auswerteinrichtung verbunden ist, die während des Öffnens der Kupplung die Wegstelle ermittelt, an der die Kraft minimal ist, eine Steuereinrichtung, die den Aktor derart steuert, dass die Kupplung nach dem Öffnen an die ermittelte Wegstelle bewegt, und die den Aktor anschließend deaktiviert, wobei die Auswerteinrichtung nach dem Deaktivieren des Aktors eine Rückkehr der Kupplung in die Offenstellung überwacht und mit wenigstens einem vorbestimmten Rückkehrparameter vergleicht.

Die Erfindung wird im Folgenden beispielsweise und mit weiteren Einzelheiten erläutert. In den einzelnen Figuren zeigt:

Fig. 1 ein Beispiel einer mit Hilfe eines Aktors betätigten, selbstöffnenden Kupplung und

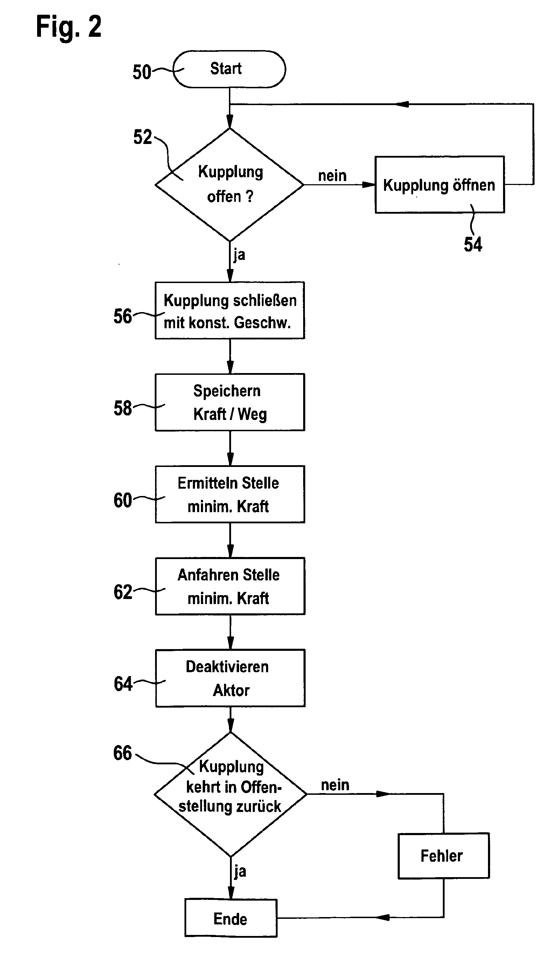

Fig. 2 ein Flussdiagramm zur Erläuterung der Erfindung.

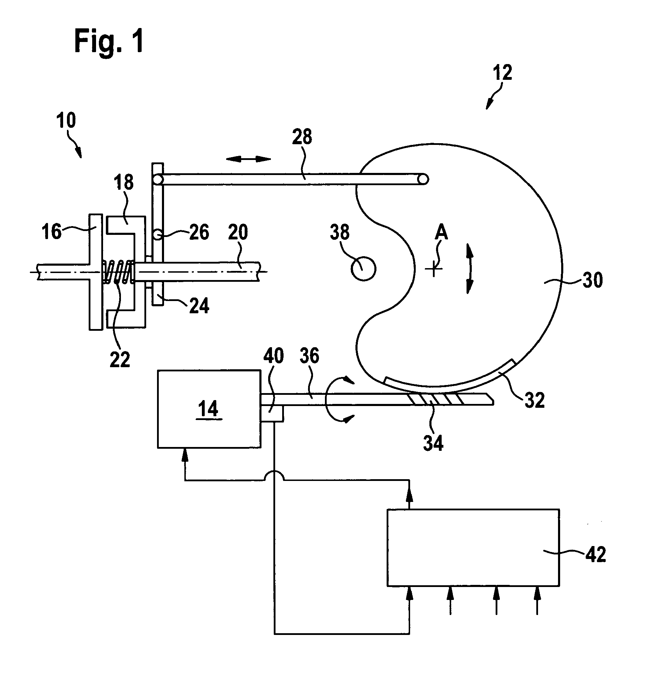

Gemäß Figur 1 ist eine insgesamt mit 10 bezeichnete Kupplung, die beispielsweise im Antriebstrang eines Kraftfahrzeugs enthalten ist, über einen insgesamt mit 12 bezeichneten Übertragungsmechanismus mit einem als Elektromotor 14 ausgebildeten Aktor verbunden.

Die Kupplung weist eine beispielsweise von der Kurbelwelle einer Brennkraftmaschine drehangetriebene Scheibe 16 auf, gegen die eine Kupplungsscheibe 18 anpressbar ist, die drehfest, jedoch axial verschiebbar mit einer Welle 20 verbunden ist, die beispielsweise eine Eingangswelle eines Getriebes bzw. eines Teilgetriebes eines Parallelschaltgetriebes ist. Eine zwischen der Scheibe 16 und der Kupplungsscheibe 18 angeordnete Feder 22 drängt die Kupplungsscheibe 18 weg von der Scheibe 16, d.h. die Kupplung insgesamt in Offenstellung. Zum Bewegen der Kupplungsscheibe 18 gegen die Scheibe 16, d.h. zum Schließen der Kupplung, dient ein Kupplungshebel 24, der um ein Lager 26 schwenkbar gelagert ist und an seinem freien Ende mit einem Betätigungsglied 28 gelenkig verbunden ist.

Das Betätigungsglied 28 ist an seinem vom Kupplungshebel 24 abgewandeten Ende gelenkig mit einer um eine Achse A schwenk- bzw. drehbaren Segmentscheibe 30 verbunden, die einen mit einer Verzahnung 32 versehenen Umfangsbereich aufweist. Die Verzahnung 32 ist in Zahneingriff mit einer Verzahnung 34 einer Ausgangswelle 36 des Elektromotors 14.

Die Drehbarkeit der Segmentscheibe 30 wird durch einen Anschlag 38 begrenzt, an den der Umfangsrand der Segmentscheibe 30 beispielsweise in voll geöffneter Stellung der Kupplung in Anlage kommt.

Die Drehung der Ausgangswelle 36 und damit die Bewegung des Kupplungshebels 24 wird von einem Inkrementsensor 40 erfasst, der mit einem Eingang einer elektronischen Steuereinrichtung 42 verbunden ist, die einen Strom- bzw. Spannungsversorgungsausgang für den Elektromotor 14 aufweist.

Aufbau und Funktion der beschriebenen Anordnungen sind an sich bekannt und werden daher nicht im Einzelnen erläutert.

Der Eingriff zwischen den Verzahnungen 32 und 34 ist nicht selbsthemmend und der Elektromotor 14 kann von der Steuereinrichtung 42 deaktiviert bzw. in Freilauf geschaltet werden, so dass die Kupplung 10 bei einwandfreier Funktion von der Feder 22 in ihre Offenstellung gedrückt bzw. bewegt wird. Die Offenstellung wird beispielsweise durch Anlage der Segmentscheibe 30 am Anschlag 38 bzw. einen Stillstand der Ausgangswelle 36 erfasst und kann zum Referenzieren des Zählstandes eines in der Steuereinrichtung 42 befindlich, dem Inkrementsensor 40 zugeordneten Inkrementzählers benutzt werden.

Zum Schließen der Kupplung wird der Elektromotor 14 von der Steuereinrichtung 42 angesteuert, so dass durch Drehen der Segmentscheibe 30 im Uhrzeigersinn und verschwenken des Kupplungshebels 24 im Uhrzeigersinn die Kupplung in Schließstellung gebracht wird. Die Schließstellung kann wiederum durch einen Anschlag erkannt werden oder derart gesteuert bzw. geregelt werden, dass zwischen den Scheiben 16 und 18 ein über nicht dargestellte Drehzahlsensoren erfasster vorbestimmter Schlupf besteht.

Im Folgenden wird ein Verfahren beschrieben, mit dem die Selbstöffnungsfunktion der Kupplung 10 überprüft werden kann:

In einem Schritt 50 wird in der Steuereinrichtung 42 ein Prüfprogramm aktiviert, was beispielsweise bei einem Doppelkupplungsgetriebe immer dann geschehen kann, wenn in dem zugehörigen Teilgetriebe kein Gang eingelegt ist. Im Schritt 52 wird überprüft, ob sich die Kupplung 10 in geschlossenem Zustand befindet. Ist dies nicht der Fall, wird im Schritt 54 die Kupplung geschlossen. Ist die Kupplung geschlossen, wird im Schritt 56 der Elektromotor 14 derart angesteuert, dass die Kupplung 10 mit konstanter Geschwindigkeit öffnet, d.h. dass sich die Ausgangswelle 36 mit konstanter Drehzahl dreht. Durch Vorgabe einer konstanten Geschwindigkeit werden durch die Aktordynamik bedingte Effekte unterdrückt. Die gewählte Geschwindigkeit sollte zwei Bedingungen erfüllen:

- Die Geschwindigkeit sollte so klein sein, dass der in der Steuereinrichtung 42 enthaltene Drehzahlregler auch auf kurzen Strecken ausreichend Zeit hat, sich an Störungen anzupassen, die beispielsweise durch eine Änderung der von der Kupplung her wirkenden Gegenkraft bedingt sind.

- Die Geschwindigkeit sollte weiter so klein gewählt werden, dass der Einfluss der Induktivität vernachlässigbar ist (der effektive Widerstand des Elektromotors ändert sich aufgrund der Induktivität mit der Motordrehzahl).

- Die Geschwindigkeit muss weiter so gewählt werden, dass sie bei der vorgegebenen Positionsauflösung des Inkrementsensors 40 und der verfügbaren Abtastzeit zu "glatten" Geschwindigkeitssignalen führt. Beispielsweise sind pro Lagereglerzeitschritt etwa 0,5 bis 1,0 Positionsinkremente erforderlich.

Bei einer Winkelauflösung des Inkrementsensors von beispielsweise 42 Inkrementen pro Umdrehung und einer Abtastzeit von 2,5 Millisekunden ergibt sich so eine Drehzahl von etwa 571 min$^{-1}$. Wenn man das Geschwindigkeitssignal im Lageregler über die letzten zwei Zeitschritte ermittelt, ergibt sich eine Drehzahl von etwa 285 min$^{-1}$. Diese Geschwindigkeit kann entweder als direkte Sollgeschwindigkeit für den Geschwindigkeitsregler vorgegeben werden, oder es kann eine Positionsrampe vorgegeben werden, die der gewünschten Geschwindigkeit entspricht. Dabei ist jedoch darauf zu achten, dass die Sollposition bei jedem Lageregler Interrupt aktualisiert wird.

Es kann erforderlich sein, eine eventuell genutzte Lastvorsteuerung der Kupplungsaktorik für die Dauer der Positionsrampen-/Konstantgeschwindigkeitsmessung zu deaktivieren, da Fehladaptionen im Lastkennfeld zu Störungen in der Aktorspannung führen können.

Die Aktorspannung während der Aktorbewegung ergibt sich theoretisch zu:

$$U = \frac{M_L R}{k_\varnothing} + \omega k_\varnothing,$$

wobei

$M_L$ = Aktorlastmoment,
$k_\phi$ = Motorkonstante des Aktormotors,
$R$ = Widerstand im Motorkreis,
$\omega$ = Aktormotorwinkelgeschwindigkeit,
$\omega k_\phi$ = drehzahlabhängiger Spannungsoffset.

Für das Selbstöffnen ($\omega < 0$) muss die Aktorspannung U über einer Untergrenze $U_{min}$ liegen, damit sicher gestellt ist, dass das System ohne Aktorspannung selbsttätig öffnet, d.h. die Feder 22 das Leerlaufmoment des deaktivierten Elektromotors 14 und die Reibung im System überdrückt. Diese Mindestspannung ergibt sich dabei aus einer minimalen Aktorlast $M_{L\,min}$ die für ein sicheres Selbstöffnen der Kupplung in ausreichend kurzer Zeit erforderlich ist.

$$U_{min} = \frac{M_{L\,min} R}{k_\varnothing} - \omega k_\varnothing$$

Es ist zu beachten, dass der drehzahlabhängige Offset $\omega k_\phi$ bei der Beurteilung der Eigenschaften der Selbstöffnung konstant oder zumindest bekannt sein muss. Dies setzt eine einwandfreie Messung der Motordrehzahl w und die Kenntnis der Motorkonstanten $k_\phi$ voraus. Sinkt die Aktorspannung bei der Prüfbewegung mit konstanter Geschwindigkeit (Positionsrampe) unter diesen Mindestwert, so ist das Selbstöffnen gefährdet.

Die genauen Spannungswerte hängen stark vom jeweiligen Aktorsystem ab. Aus dem Vergleich zwischen den Haltespannungsgrenzen, die aus dem Aktorlastkennfeld ermittelbar sind, und den Spannungen bei der Positionsrampenfahrt kann die Motorkonstante $k_\phi$ ermittelt werden, da diese Spannungsdifferenz genau dem Wert von $\omega k_\phi$ entspricht.

Für die Auswertung der Aktorspannung ist zur Rauschverminderung eine Tiefpassfilterung vorteilhaft, die sich mit einem einfachen PT1-Filter durchführen lässt. Um dabei nicht die Relation zwischen der Aktorspannung und der Aktorposition zu verlieren, sollte auch die jeweils neue Aktorposition mit demselben Tiefpassfilter gefiltert werden.

Bei dem erfindungsgemäßen Verfahren kann eine Störung der Selbstöffnungsfunktion der Kupplung dadurch ermittelt wird, dass die Aktorspannung bzw. die am Elektromotor 14 liegende Spannung während der Öffnungsbewegung mit konstanter Geschwindigkeit (Schritt 56) eine vorbestimmte Mindestspannung unterschreitet (die Aktorspannung ist ein Maß für die Kraft, die vom Aktor auf den Kupplungshebel 24 aufgebracht wird).

Vorteilhaft ist, während der Öffnungsbewegung die minimale Spannung bzw. die minimale Kraft zu ermitteln, mit der der Elektromotor die Öffnungsbewegung der Kupplung bremst und die Kupplung, nachdem sie unter Störung des Aktors (Elektromotors) voll geöffnet ist, an die Stelle zu bewegen, an der die minimale Kraft vorherrscht, um anschließend zu prüfen, ob die Kupplung aus dieser kritischen Stelle selbsttätig öffnet. Dazu werden im Schritt 58 zunächst zwei während der Öffnungsbewegung der Kupplung aufeinander folgend gemessene Wertepaare Kmin, Wmin; Kn, Wn gespeichert, wobei Kmin und Wmin zunächst die Anfangswerte der Kraft und der zugehörigen Stellung der Kupplung (Weg.Wn) sind und der Wert von n sich entsprechend der Taktfrequenz des Systems erhöht. Im Schritt 60 wird anschließend überprüft, ob die aktualisierte Kraft Kn kleiner ist als die bisher gespeicherte Kraft Kmin. Ist dies der Fall, so wird im Schritt 62 der Speicher (Schritt 58) aktualisiert der Wert Kmin auf die aktuelle gemessene kleinere Kraft Kn und der Wert Wmin auf den zugehörigen aktuellen Wert Wn gesetzt. Ist dies nicht der Fall, so bleiben die gespeicherten Werte Kmin und Wmin unverändert. Die Öffnungsbewegung dauert an, so dass der jeweils aktuelle Wert Kn mit dem bisher gespeicherten Wert Kmin verglichen wird und, falls der aktuelle Wert Kn unter dem gespeicherten Wert Kmin liegt, Kmin und Wmin auf den aktuellen Wert aktualisiert werden. Der Vorgang hält an, bis im Schritt 66 festgestellt wird, dass die Kupplung offen ist. Das System geht dann zum Schritt 68, in dem mit dem Aktor der zuletzt gespeicherte Wert Wmin angefahren wird, d.h. die Kupplung in die Stellung gebracht wird, in der während der Öffnungsbewegung die geringste Kraft zur Einhaltung der Konstanten Öffnungsgeschwindigkeit erforderlich war. Wenn diese Stelle erreicht ist, wird der Aktor im Schritt 70 deaktiviert bzw. auf "disable" gestellt, so dass sich der Elektromotor im Leerlauf befindet (die ihn ansteuernden Leistungstransistoren sind hochohmig) und es wird im Schritt 72 überprüft, ob die Kupplung in vorbestimmter Weise in die Offenstellung zurückkehrt. Dabei kann eine Zeitdauer abgewartet werden und überprüft werden, ob die Offenstellung innerhalb dieser Zeitdauer erreicht wird (Anschlagen der Segmentscheibe 30 am Anschlag 38). Weiter kann überwacht werden, ob innerhalb einer vorbestimmten Zeitdauer ein Mindestweg zurückgelegt wird und/oder ob der von der Feder 22 drehangetriebene Elektromotor 14 eine vorbestimmte Drehzahl erreicht.

Da die Zeit, die Geschwindigkeit oder die zurückgelegte Strecke ausgewertet werden, kann auch erkannt werden, ob das Selbstöffnen mit ausreichender Dynamik funktioniert. Wenn das nicht der Fall ist, kann dies auf die Notwendigkeit einer Nachstellung der Kupplung deuten.

Wenn der Schritt 72 mit positivem Ergebnis beendet wird, endet das Programm im Schritt 74. Andernfalls wird der Schritt 74 über eine Fehleranzeige (Schritt 76) erreicht, der mit dem Auslösen von Sicherheitsstrategien verbunden sein kann.

Bei dem beschriebenen Verfahren, bei dem das selbsttätige Öffnen der Kupplung normalerweise von dem Aktor gebremst wird, kann es vorkommen, dass die am Aktor liegende Spannung während des Öffnens mit der vorgegebenen Geschwindigkeit auf Null abfällt oder sogar umgepolt werden muss, wenn die Kupplung vom Aktor aufgezogen werden muss. Dies kann dann unmittelbar als Fehler bezüglich der selbsttätigen Öffnung der Kupplung gewertet werden oder in der beschriebenen Minimumauswertung der Spannung wird die Umpolung als weitere Abnahme der Spannung (in der umgepolten Richtung) gewertet, so dass diese Spannung dann als Minimalwert ermittelt wird und die zugehörige Stellung der Kupplung angefahren wird.

Die beschriebene Ermittlung des Kraft- bzw. Spannungsminimums kann auch dadurch erfolgen, dass während der gesamten Öffnungsbewegung eine Kraftwegkurve aufgenommen wird, gespeichert wird und die Kraftwegkurve nach erreichen der Öffnungsstellung auf das Kraftminimum hin ausgewertet wird.

Das beschriebene Verfahren, bei dem das Kraftminimum entsprechend der bevorzugten Durchführungsform während der Öffnungsbewegung der Kupplung ermittelt wird, kann auch derart durchgeführt werden, dass die Kupplung vom Aktor aus der Offenstellung in die Schließstellung bewegt wird und dabei das Kraftminimum ermittelt wird.

In einer abgewandelten Durchführungsform des Verfahrens wird die Kupplung von dem Aktor mit vorgegebener konstanter Kraft bzw. konstantem Drehmoment des Elektromotors in ihre Offenstellung oder in ihre Schließstellung bewegt und wird die Geschwindigkeit während dieser Bewegung erfasst. Wenn die Geschwindigkeit während des Öffnens oder des Schließens einen vorbestimmten Wert unterschreitet oder übersteigt, deutet dies auf einen Fehler in der Selbstöffnungsfunktion.

Sowohl das Verfahren, bei dem lediglich die bei konstanter Betätigungsgeschwindigkeit während der Betätigung der Kupplung (bevorzugt in Öffnungsrichtung) auftretende Kraft oder die bei mit konstanter Kraft betätigten Kupplung auftretende Geschwindigkeit erfasst wird und ein Test der Selbstöffnungsfunktion der Kupplung aus einer kritischen Stelle heraus (Stelle kleinster Kraft oder größter Geschwindigkeit) nicht erfolgt, kann auch das Auftreten einer unzulässig hohen Betätigungskraft bei konstanter Betätigungsgeschwindigkeit oder unzulässig kleinen Geschwindigkeit bei konstanter Betätigungskraft überwacht werden, da dies ebenfalls auf eine Störung in der Kupplungsaktorik hindeuten kann, beispielsweise eine Schwergängigkeit oder ein Fressen eines Lagers.

Die Erfindung kann für unterschiedlichste Kupplungsaktoriken eingesetzt werden, beispielsweise kann dem Aktor und dem Betätigungshebel der Kupplung eine hydraulische Übertragungsstrecke angeordnet sein. Die Kupplung kann insgesamt hydraulisch, pneumatisch oder sonstwie betätigt werden.

**Bezugszeichenliste**

| | |
|---|---|
| 10 | Kupplung |
| 12 | Übertragungsmechanismus |
| 14 | Elektromotor |
| 16 | Scheibe |
| 18 | Kupplungsscheibe |
| 20 | Welle |
| 22 | Feder |
| 24 | Kupplungshebel |
| 26 | Lager |
| 28 | Betätigungsglied |
| 30 | Segmentscheibe |
| 32 | Verzahnung |
| 34 | Verzahnung |
| 36 | Ausgangswelle |
| 38 | Anschlag |
| 40 | Inkrementsensor |
| 42 | elektronische Steuereinrichtung |

**Patentansprüche**

**1.** Verfahren zum Überprüfen der Selbstöffnungsfunktion einer von einem Aktor betätigten Kupplung, bei welchem Verfahren

- die Kupplung von dem Aktor mit vorgegebener konstanter Geschwindigkeit aus ihrer Schließstellung in ihre Offenstellung oder aus ihrer Offenstellung in ihre Schließstellung bewegt wird,
- die von dem Aktor aufgebrachte Kraft während der Bewegung erfasst wird und
- ein Unterschreiten und/oder ein Überschreiten eines vorbestimmten Wertes der Kraft als fehlerhafte Selbstöffnungsfunktion gewertet wird.

**2.** Verfahren zum Überprüfen der Selbstöffnungsfunktion einer von einem Aktor betätigten Kupplung, bei welchem Verfahren

- die Kupplung von dem Aktor mit vorgegebener konstanter Geschwindigkeit aus ihrer Schließstellung in ihre Offenstellung oder aus ihrer Offenstellung in ihre Schließstellung bewegt wird,
- während der Bewegung der Kupplung die Stelle des Weges ermittelt wird, bei der die Kraft minimal ist,
- die Kupplung von dem Aktor an die ermittelte Wegstelle bewegt wird,
- der Aktor deaktiviert wird und
- überprüft wird, ob die Kupplung nach Deaktivieren des Aktors in vorbestimmter Weise in ihre Offenstellung zurückkehrt.

**3.** Verfahren nach Anspruch 1 oder 2, wobei der Aktor ein Elektromotor ist und die Kraft durch Erfassen der Spannung des auf konstante Drehzahl geregelten Elektromotors ermittelt wird.

**4.** Verfahren nach Anspruch 2, wobei überprüft wird, ob die Kupplung innerhalb einer vorbestimmten Zeitdauer in ihre Offenstellung zurückkehrt.

**5.** Verfahren nach Anspruch 2 oder 4, wobei überprüft wird, ob sich die Kupplung wenigstens mit einer vorbestimmten Mindestgeschwindigkeit in Richtung auf ihre Offenstellung bewegt.

**6.** Verfahren zum Überprüfen der Selbstöffnungsfunktion einer von einem Aktor betätigten Kupplung, bei welchem Verfahren

> - die Kupplung von dem Aktor mit vorgegebener konstanter Kraft aus ihrer Schließstellung in ihre Offenstellung oder aus ihrer Offenstellung in ihre Schließstellung bewegt wird,
> - die Geschwindigkeit während der Bewegung erfasst wird und
> - ein Überschreiten eines vorbestimmten Wertes der Öffnungsgeschwindigkeit und/oder ein Unterschreiten eines vorbestimmten Wertes der Öffnungsgeschwindigkeit als fehlerhafte Öffnungsfunktion gewertet wird.

**7.** Vorrichtung zum Überprüfen der Selbstöffnungsfunktion einer von einem Aktor betätigten Kupplung, enthaltend
eine gegen die Kraft einer Öffnungsfeder (22) schließende Kupplung (10),
einen Aktor (14) zum Betätigen der Kupplung, wobei der Aktor bei einwandfreier Funktion Systemfunktion im aktivierten Zustand die Kupplung gegen die Kraft der Öffnungsfeder schließt und die Kupplung im deaktivierten Zustand des Aktors von der Öffnungsfeder aus der Schließstellung in die Offenstellung gedrängt wird,
eine Kraftmesseinrichtung (42) zum Erfassen der vom Aktor auf die Kupplung während des Öffnens oder des Schließens der Kupplung aufgebrachten Kraft und
eine Auswerteinrichtung (42) zum Ermitteln des minimalen und/oder maximalen Wertes der Kraft während Öffnens oder des Schließens der Kupplung.

**8.** Vorrichtung nach Anspruch 7, enthaltend eine Geschwindigkeitsteuereinrichtung (42) zur Steuerung des Aktors (14) derart, dass die Kupplung (10) mit konstanter Geschwindigkeit geöffnet wird.

**9.** Vorrichtung nach Anspruch 7 oder 8, enthaltend einen Wegsensor (40) zum Erfassen der Stellung der Kupplung (10) während des Öffnens, welcher Wegsensor mit der Auswerteinrichtung (42) verbunden ist, die während des Öffnens der Kupplung die Wegstelle ermittelt, an der die Kraft minimal ist,
eine Steuereinrichtung (42), die den Aktor derart steuert, dass die Kupplung nach dem Öffnen an die ermittelte Wegstelle bewegt wird, und die den Aktor anschließend deaktiviert, wobei
die Auswerteinrichtung (42) nach dem Deaktivieren des Aktors eine Rückkehr der Kupplung in die Offenstellung überwacht und mit wenigstens einem vorbestimmten Rückkehrparameter vergleicht.

# Fig. 1

# Fig. 2

Flowchart:

- 50 — Start
- 52 — Kupplung offen ?
  - nein → 54 — Kupplung öffnen (loops back)
  - ja ↓
- 56 — Kupplung schließen mit konst. Geschw.
- 58 — Speichern Kraft / Weg
- 60 — Ermitteln Stelle minim. Kraft
- 62 — Anfahren Stelle minim. Kraft
- 64 — Deaktivieren Aktor
- 66 — Kupplung kehrt in Offenstellung zurück
  - nein → Fehler → Ende
  - ja → Ende